# EUROPEAN PATENT APPLICATION

(11) **EP 4 628 968 A1**
(43) Date of publication of application: **08.10.2025**
(21) Application number: 22967930.3
(22) Date of filing: 07.12.2022
(51) Int. Cl.: G02B 27/01, G02C 5/22, G02C 11/00

(54) **ELECTRONIC DEVICE**

(71) Applicant: LG Electronics Inc., Yeongdeungpo-gu Seoul 07336 (KR)
(72) Inventor: CHA, Youngdo, Seoul 06772 (KR); KIM, Minsoo, Seoul 06772 (KR); PARK, Jungil, Seoul 06772 (KR); KIM, Samyoup, Seoul 06772 (KR); JO, Seong, Seoul 06772 (KR)
(74) Representative: Schott, Jakob Valentin
(86) International application number: PCT/KR2022/019833
(87) International publication number: WO 2024/122672

(57) **Abstract**

The present disclosure relates to an electronic device. The electronic device comprises: a front frame to which light-transmissive display units attach; side frames hinge-connected to respective sides of the front frame; FPCBs embedded in the front frame and side frames, extending from the front frame to the side frames; and hinge modules connecting the front frame and side frames, wherein each hinge module comprises a first body fixed to the front frame on one side, and a second body rotatably coupled to the first body and coupled to a side frame, and an FPCB may face first and second bodies.

## Description

### [TECHNICAL FIELD]

The present disclosure relates to an electronic device. More particularly, the present disclosure relates to an electronic device used in virtual reality (VR), augmented reality (AR), mixed reality (MR), etc.

### [BACKGROUND ART]

Virtual reality (VR) refers to a specific environment or situation which is similar to reality created by artificial technology using a computer, etc., but is not reality or the technology itself.

Augmented reality (AR) refers to technology that combines a virtual object or information with a real environment to make it look like an object in an original environment.

Mixed reality (MR) or hybrid reality refers to technology that combines a virtual world and a real world to make a new environment or new information. In particular, an interaction between in objects which exist in reality and virtuality in real time is referred to as the mixed reality.

A created virtual environment or situation stimulates five senses of a user and makes spatial and temporal experiences similar to the reality, thereby making the user freely enter a boundary between the reality and imagination. The user is capable of interacting with objects implemented in such an environment, such as giving an operation or a command by using a device which actually exists in addition to immersion in such an environment.

In recent years, a research into a gear used in such a technical field has been actively conducted.

### [DETAILED DESCRIPTION OF INVENTION]

### [TECHNICAL PROBLEMS]

In view of the above, the present disclosure solves the above-described problems and other problems.

According to one embodiment of the present disclosure, the present disclosure may provide an electronic device used in virtual reality (VR), augmented reality (AR), mixed reality (MR), etc.

According to one embodiment of the present disclosure, the present disclosure may provide a structure of the electronic device used for the augmented reality (AR).

According to one embodiment of the present disclosure, the present disclosure may provide a hinge structure of the electronic device used for the augmented reality (AR).

### [TECHNICAL SOLUTION]

In order to achieve the or another object, according to an aspect of the present disclosure, an electronic device may include: a front frame to which light-transmissive display units are coupled; side frames hinge-connected to respective sides of the front frame; FPCBs embedded in the front frame and side frames, and extending from the front frame to the side frames; and hinge modules connecting the front frame and the side frames, and each hinge module may include a first body fixed to the front frame on one side, and a second body pivotably coupled to the first body and coupled to the side frame, and the FPCB may face the first body and the second body.

### [EFFECT OF INVENTION]

Effects of the electronic device according to the present disclosure will be described below.

According to at least one of the embodiments of the present disclosure, an electronic device used in virtual reality (VR), augmented reality (AR), mixed reality (MR), etc., can be provided

According to at least one of the embodiments of the present disclosure, a structure of the electronic device used for the augmented reality (AR) can be provided.

According to at least one of the embodiments of the present disclosure, a hinge structure of the electronic device used for the augmented reality (AR) can be provided.

An additional range of an applicability of the present disclosure will be apparent from the following detailed description. However, since various changes and modifications can be clearly appreciated by those skilled in the art within the spirit and the scope of the present disclosure, the detailed description and a specific embodiment such as a preferred embodiment of the present disclosure should be appreciated as being just given as an example.

### [BRIEF DESCRIPTION OF THE DRAWING]

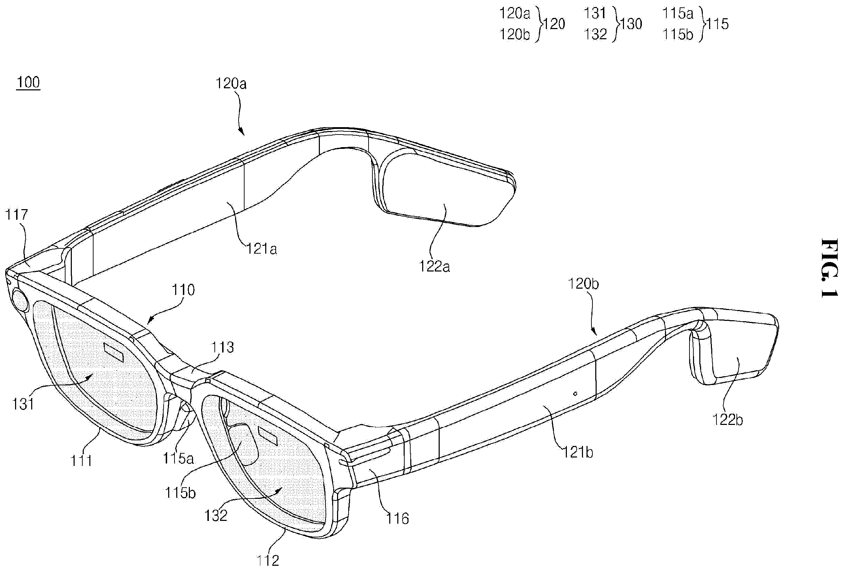

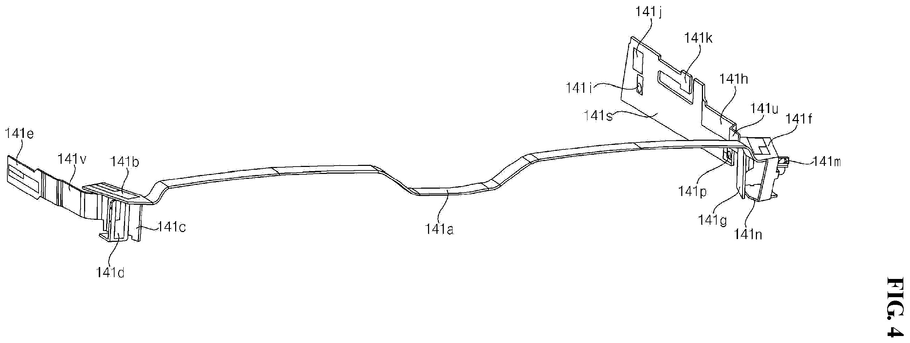

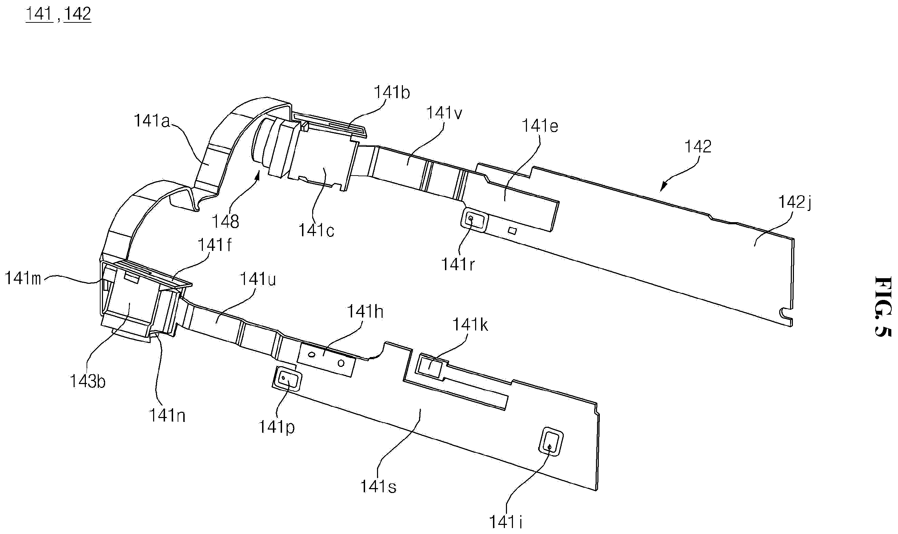

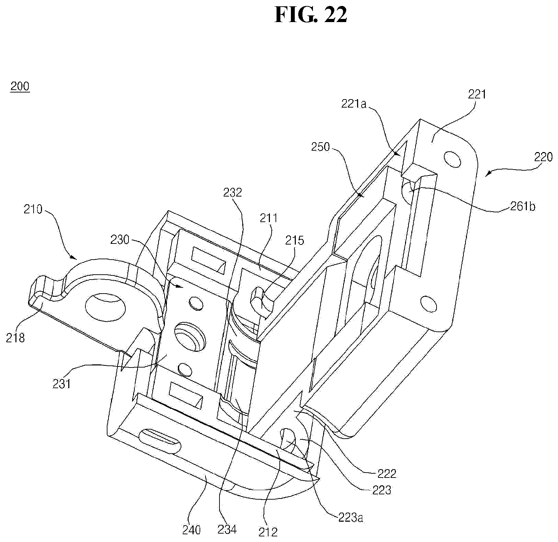

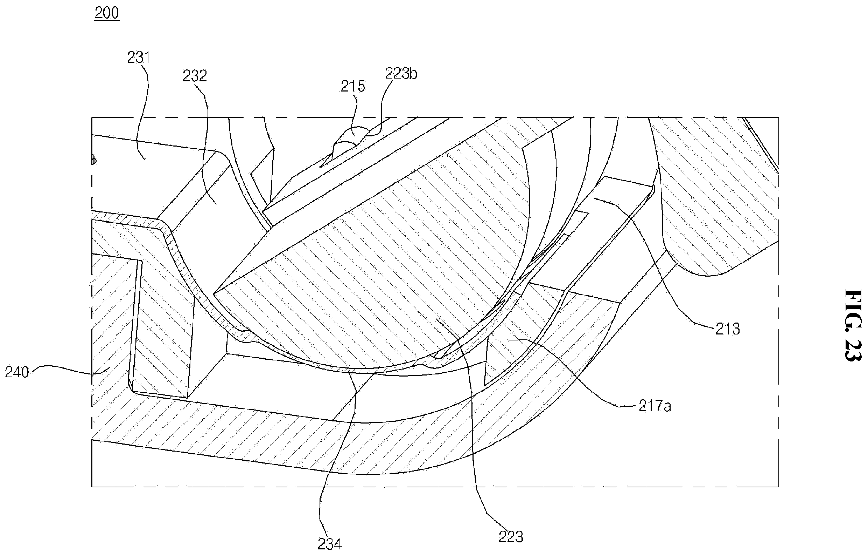

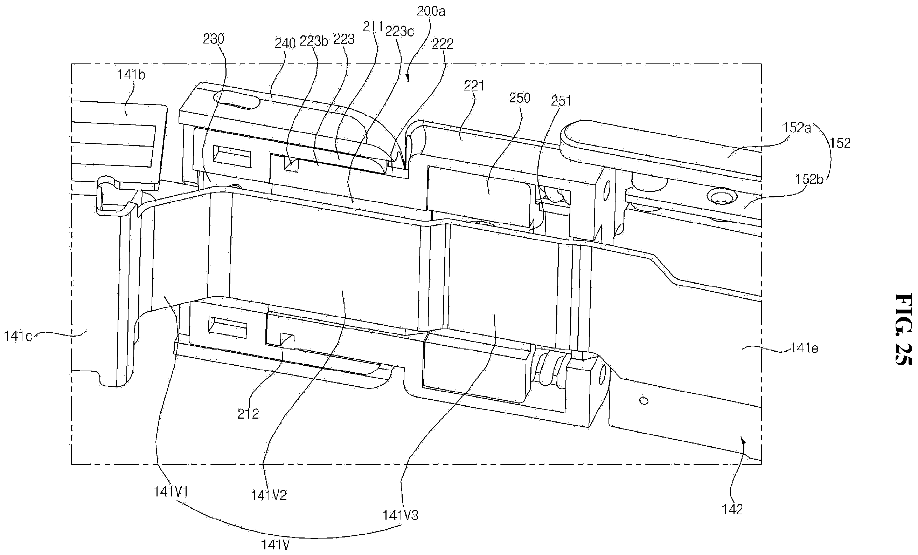

FIGS. 1 to 28 are diagrams illustrating examples of an electronic device according to embodiments of the present disclosure.

### [BEST MODE FOR CARRYING OUT THE INVENTION]

Hereinafter, embodiments disclosed in the present disclosure will be described in detail with reference to the accompanying drawings and the same or similar components are denoted by the same reference numerals regardless of a sign of the drawing, and duplicated description thereof will be omitted.

Suffixes "module" and "unit" for components used in the following description are given or mixed in consideration of easy preparation of the present disclosure only and do not have their own distinguished meanings or roles.

Further, in describing the embodiment of the present disclosure, a detailed description of related known technologies will be omitted if it is determined that the detailed description makes the gist of the embodiment disclosed in the present disclosure unclear. Further, it is to be understood that the accompanying drawings are just used for easily understanding the embodiments disclosed in the present disclosure and a technical spirit disclosed in the present disclosure is not limited by the accompanying drawings and all changes, equivalents, or substitutes included in the spirit and the technical scope of the present disclosure are included.

Terms including an ordinary number, such as first and second, are used for describing various constituent elements, but the constituent elements are not limited by the terms. The terms are used only to discriminate one constituent element from another constituent element.

It should be understood that, when it is described that a constituent element is "connected to" or "accesses" another constituent element, the constituent element may be directly connected to or access the other constituent element or a third constituent element may be present therebetween. In contrast, when it is described that a constituent element is "directly connected to" or "directly accesses" another constituent element, it is understood that no constituent element is present between the constituent element and another constituent element.

A singular form includes a plural form if there is no clearly opposite meaning in the context.

In the present disclosure, it should be understood that term "include" or "have" indicates that a feature, a number, a step, an operation, a component, a part or the combination thereof described in the specification is present, but does not exclude a possibility of presence or addition of one or more other features, numbers, steps, operations, components, parts or combinations thereof, in advance.

Referring to FIG 1, the electronic device 100 may be generally in a shape of glasses or goggles. The electronic device 110 may include frames 110 and 120, and display units 130, 131, and 132.

The frames 110 and 120 may include a front frame 110, a side frame 120, and a nose support 115. The front frame 110 may include a plurality of rims 111 and 112, a bridge 113, and end pieces 116 and 117. The bridge 113 may connect a first rim 111 and a second rim 112. Shapes of openings of the rims 111 and 112 may correspond to a shape of the display unit 130. For example, the display unit 130 may be coupled to or fixed to the openings of the rims 111 and 112. The first end piece 117 may face the bridge 113 with respect to the first rim 111 and the second end piece 116 may face the bridge 113 with respect to the second rim 112. The front frame 110 may be left-right symmetric around the bridge 113.

The side frame 120 may be coupled to the front frame 110. The side frame 120 may be hinge-connected to the end pieces 116 and 117. For example, a first side frame 120a may be hinge-connected to the first end piece 117 and a second side frame 120b may be hinge-connected to the second end piece 116. The side frame 120 may include temples 121a and 121b and temple tips 122a and 122b. The temples 121a and 121b may be hinge-connected to the end pieces 116 and 117. The temple tips 122a and 122b may be opposite to the end pieces 116 and 117 with respect to the temples 121a and 121b.

The nose support 115 may be coupled to the bridge 113 or the rims 111 and 112. For example, a first nose support 115a may be coupled to a first rim 111 or the bridge 113 and a second nose support 115b may be coupled to a second rim 112 or the bridge 113. Depending on structures of the frames 110 and 120, the nose support 115 may be omitted or integrally formed with the front frame 110.

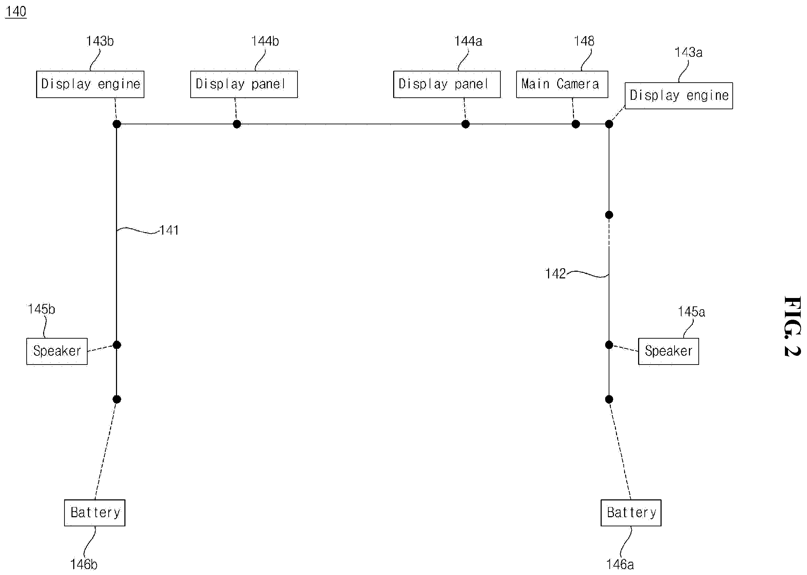

Referring to FIG 2, the electronic device 100 (see FIG 1) may include a main PCB 142 and a sub PCB 141. For example, the main PCB 142 and/or the sub PCB 141 may be a flexible printed circuit board (F-PCB). The sub PCB 141 may be elongated and may be embedded in the frames 110 and 120. For example, the sub PCB 141 may be embedded in the front frame 110, the second end piece 116, and/or the second side frame 120b. As another example, the sub PCB 141 may be embedded in the front frame 110, the first end piece 117, the second end piece 116, the first side frame 120a, and/or the second side frame 120b.

The main PCB 142 may be embedded in the frames 110 and 120, and electrically connected to the sub PCB 141. For example, the main PCB 142 may be embedded in the first side frame 120a and connected to the sub PCB 141.

A first battery 146a may be electrically connected to the main PCB 142 and may supply power to the main PCB 142. A second battery 146b may be electrically connected to the sub PCB 141 and may supply power to the sub PCB 141. A first speaker 145a may be electrically connected to the main PCB 142 and may receive a signal from the main PCB 142 and output a sound. A second speaker 145b may be electrically connected to the sub PCB 141, and may receive the signal from the sub PCB 141 and output the sound.

A first display engine 143a and a second display engine 143b may be electrically connected to the sub PCB 141. A first display panel 144a and/or a second display panel 144b may be electrically connected to the sub PCB 141. The first display engine 143a may provide an image signal, a video signal, or a text signal to the first display panel 144a, and the second display engine 143b may provide the image signal, the video signal, or the text signal to the second display panel 144b. For example, the display panels 144a and 144b may be a micro LED, an OLED, and an OLED on silicon (OLEDos). The display engine 143 and the display panel 144 may be referred to as imaging modules 143 and 144, imaging engines 143 and 144, image generators 143 and 144, or display modules 143 and 144.

Referring to FIG 1 together, the first display engine 143a may be embedded in the first end piece 117 and the first display panel 144a may be embedded in the first rim 111. The second display engine 143b may be embedded in the second end piece 116 and the second display panel 144b may be embedded in the second rim 112. A main camera 148 may be electrically connected to the sub PCB 141, and embedded in the first end piece 117.

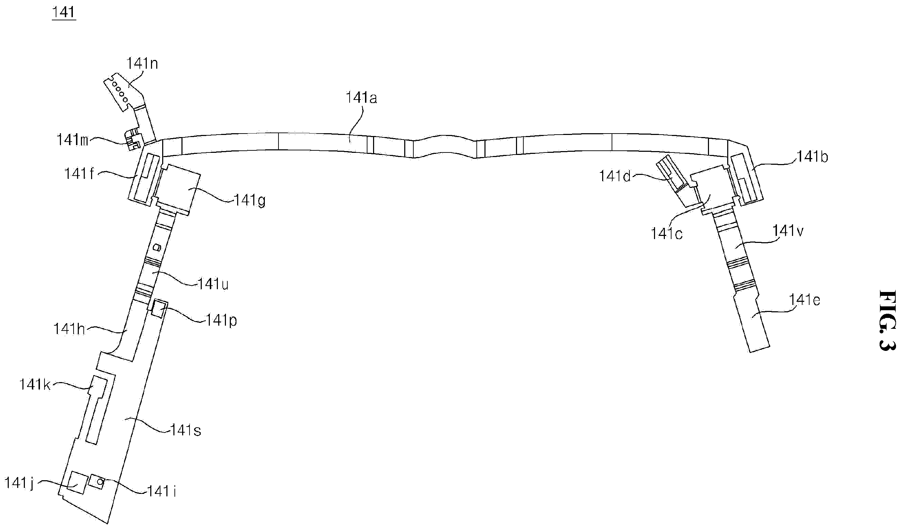

Referring to FIGS. 3 to 5 together with FIG 2, the sub PCB 141 may include a main line 141a, a first display connector 141b, a camera module connector 141d, a first display board 141c, a main board connector 141e, a second display connector 141f, a second display board 141g, a sensor connector 141m, an electrode board 141n, a switching board 141h, a first microphone board 141i, a second power connector 141j, a second microphone board 141k, a third microphone board 141p, and/or a fourth microphone board 141r.

The main line 141a may be elongated and have a width smaller than widths of the rims 111 and 112 of the front frame 110 (see FIG 1). The first display connector 141b may be formed on one end of the main line 141a. The first display panel 144a may be connected to the first display connector 141b. The first display board 141c may be bent and extended from the first display connector 141b. The first display engine 143a including electronic elements for image generation may be mounted on the first display board 141c. For example, an image processing processor, a T-CON board, or the like may be mounted on the second display board 141c.

The camera module connector 141d may be bent and extended from the first display board 141c. The main camera 148 may be connected to the camera module connector 141d. The main board connector 141e may be extended from the first display board 141c. The main board 142 may be connected to the main board connector 141e.

The second display connector 141f may be formed on the other end of the main line 141a. The second display panel 144b may be connected to the second display connector 141f. The second display board 141g may be bent and extended from the second display connector 141f. The second display engine 143b including electronic elements for image generation may be mounted on the second display board 141g. For example, the image processing processor, the T-CON board, or the like may be mounted on the second display board 141g.

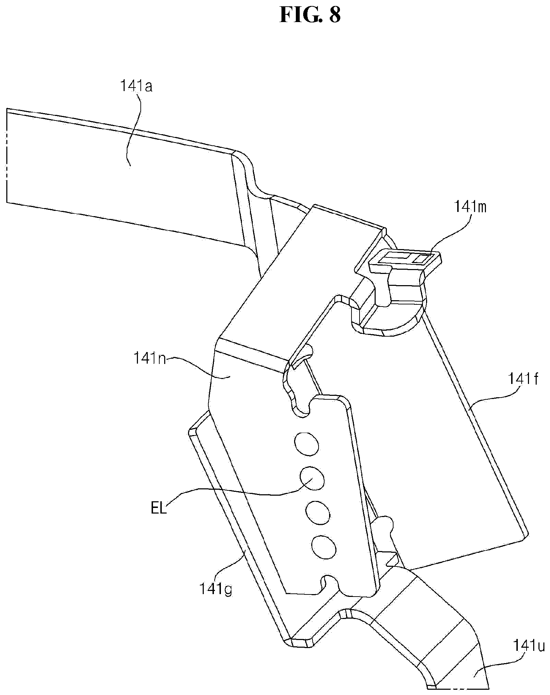

The electrode board 141n may be connected to the main line 141a or the second display connector 141f. The electrode board 141n may be in contact with a device provided externally and electrically connected with the external device. For example, the electrode board 141n may include a plurality of electrodes ELs (see FIG 8).

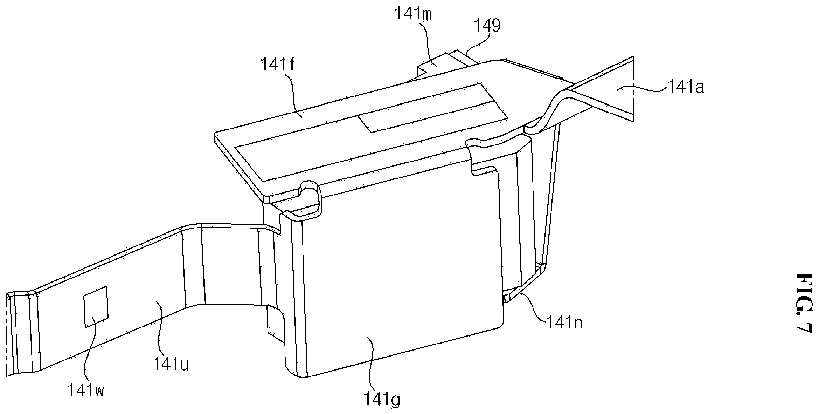

The sensor connector 141m may be connected to the main line 141a or the electrode board 141n. Sensors 149 (see FIG 7) that sense an external environment may be connected to the sensor connector 141m. For example, the sensor 149 may be an illuminance sensor.

The flat board 141s may be connected to the second display board 141g. The second microphone board 141k may be extended on one side of the flat board 141s. The first microphone board 141i may be formed on the flat board 141s. The second power connector 141j may be formed on the flat board 141s. The flat board 141s may be connected to the second display board 141g by a second hinge FPCB 141u. The switching board 141h may be formed on the flat board 141s adjacent the second hinge FPCB 141u. The third microphone board 141p may be formed on the flat board 141s adjacent to the switching board 141h.

The main board connector 141e may be connected to the first display board 141c by a first hinge FPCB 141v. The fourth microphone board 141r may be formed on the main PCB 142 adjacent to the main board connector 141e. The first power connector 142j may be formed on the main PCB 142.

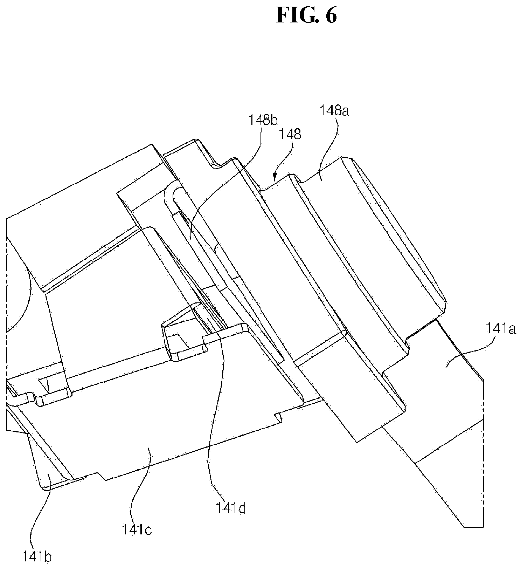

Referring to FIGS. 6 and 7, the main camera 148 may be coupled to the camera module connector 141d. The main camera 148 may include a camera module 148a and a connection electrode 148b. The camera module 148a may include an imaging element, and may convert light flowing from the outside into an electric signal. The connection electrode 148b may be connected to the camera module 148a. The connection electrode 148b may be electrically connected to the imaging element. The connection electrode 148b may be fixed to the camera module connector 141d. The connection electrode 148b may be electrically connected to the camera module connector 141d.

The sensor 149 may be mounted on the sensor connector 141m. The sensor 149 may be electrically connected with the sensor connector 141m. For example, the sensor 149 may be an illuminance sensor 149.

The second display engine 143b including electronic elements for image generation may be mounted on the second display board 141g. For example, the image processing processor, the T-CON board, or the like may be mounted on the second display board 141g.

The hall sensor 141w may be formed or mounted on the second hinge board 141u.

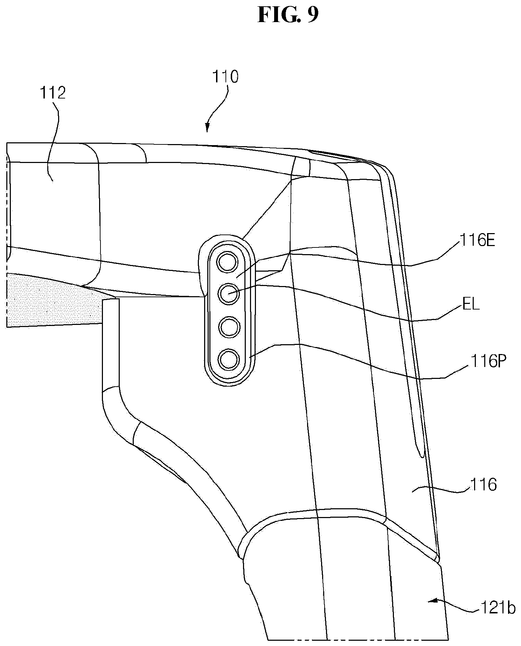

Referring to FIGS. 8 and 9, a plurality of electrodes EL may be fixed to the electrode board 141n. The plurality of electrodes EL may be arranged in line. The plurality of electrodes EL and the electrode board 141n may be located inside the second end piece 116. An electrode opening 116p may be formed in the second end piece 116. The electrode opening 116p may be elongated. An electrode cover 116E may have a shape corresponding to the electrode opening 116p and may be inserted into the electrode opening 116p. The electrode cover 116E may include a plurality of holes. Each of the plurality of holes may correspond to each of the plurality of electrodes EL. The electrodes EL may be exposed to the outside through the plurality of holes of the electrode cover 116E. The electrodes EL may be used for charging or the like of the electronic device 100.

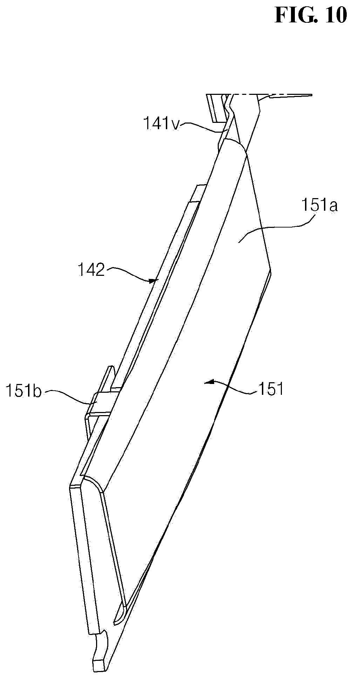

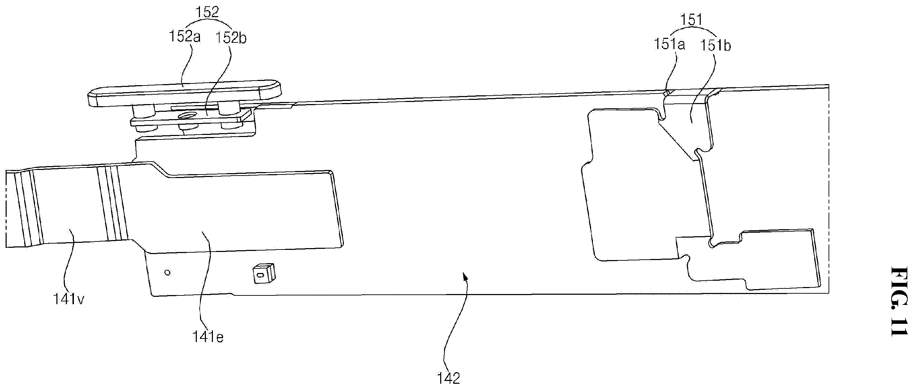

Referring to FIGS. 10 and 11, the touch pad 151 may be connected to the main PCB 142. The touch pad 151 may include a touch panel 151a and a panel electrode 151b. The touch panel 151a may be located on an outer surface of the main PCB 142 and may face the outer surface of the main PCB 142. For example, the touch panel 151a may be a capacitively sensitive panel. As another example, the touch panel 151a may be a capacitively sensitive panel. The panel electrode 151b may electrically connect the main PCB 142 and the touch panel 151a.

The camera switch 152 may be installed in the main PCB 142. The camera switch 152 is located on an upper side of the main PCB 142, and may be electrically connected to the main PCB 142. The camera switch 152 may adjust an operation of the main camera 148. The camera switch 152 may include a button 152a and a switching unit 152b. An electric signal may be generated while the button 152a is pressed and is in contact with the switching unit 152b. For example, the camera switch 152 may act as a shutter button of the camera.

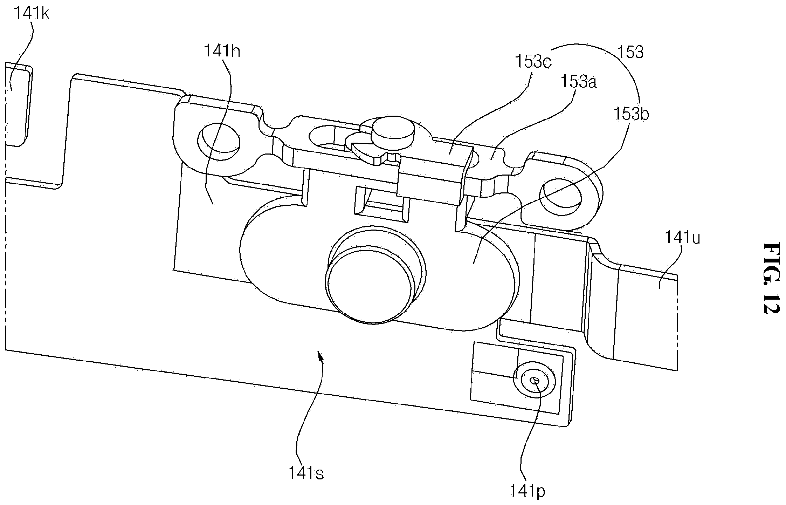

Referring to FIG 12, the power switch 153 may include a base 153a, a switching button 153b, and a connector 153c. The base 153a may be located on an upper side of the flat board 141s. The switching button 153b may move while sliding on the base 153a. The connector 153c may connect the switching button 153b and the base 153a. The switching button 153b may be in electrical contact with the switching board 141h of the flat board 141s. An electrical signal generated by the switching button 153b and the switching board 141h of the flat board 151s may vary depending on a position of the switching button 153b. For example, the switching button 153b may move from the second microphone board 141k toward the second hinge FPCB 141u on the base 153a. When the switching button 153b moves from the base 153a and approaches the second hinge FPCB 141u as much as possible, the electronic device 100 may be turned on. The switching button 153b may be retracted to an original position at the base 153a. An elastic force may be provided to the switching button 153b for restoring the position of the switching button 153b.

For example, when the user pushes the switching button 153b in an intermediate position toward the second hinge FPCB 141u as much as possible to use the electronic device 100, the electronic device 100 may be activated, and the switching button 153b may be restored to the intermediate position. When the user does not use the electronic device 100 for a certain period of time, the electronic device 100 may enter a power saving mode. The user may push the switching button 153b toward the second hinge FPCB 141u to activate the electronic device 100 to use the electronic device 100 again. When the switching button 153b is pushed toward the second microphone board 141k, the electronic device 100 may be deactivated and enter an OFF mode.

As another example, when the user pushes the switching button 153b in the intermediate position toward the second hinge FPCB 141u as much as possible to use the electronic device 100, the electronic device 100 may be activated, and the switching button 153b may be restored to the intermediate position. The user may push the switching button 153b toward the second hinge FPCB 141u to activate a wireless connectivity, in order to connect the electronic device 100 and another device. For example, the wireless connection may be Bluetooth, Wi-Fi, NFC, etc. The power switch 153 may be referred to as a function switch 153.

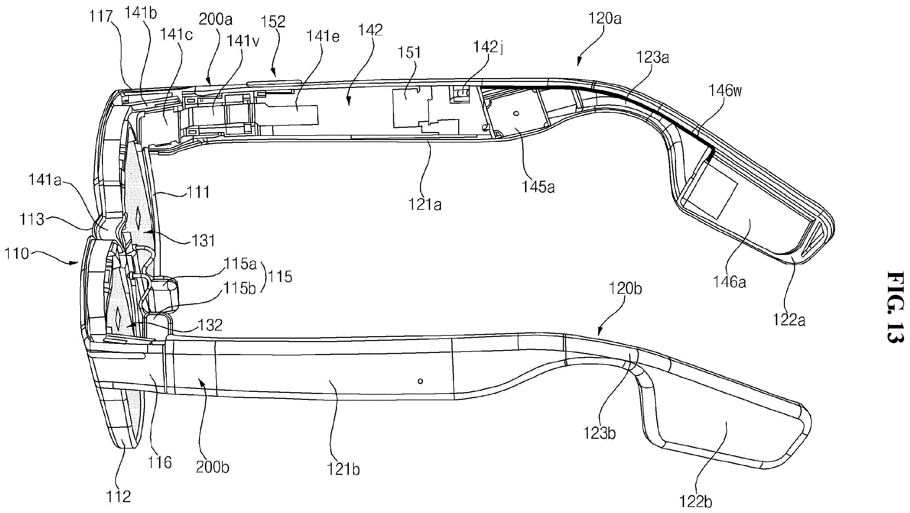

Referring to FIG 13, the main line 141a may be located inside an upper side of the front frame 110. For example, the main line 141a may be embedded above the first rim 111, above the bridge 113, and/or above the second rim 112. The first display connector 141b, the first display board 141c, and/or the camera module connector 141d may be embedded in the first end piece 117. The main PCB 142 may be embedded in the temple 121a of the first side frame 120a. The first side frame 120a may be hinge-connected to the first end piece 117. The first hinge FPCB 141v connecting the first display board 141c and the main PCB 142 may be embedded in the first hinge 200a and/or the temple 121a of the first side frame 120a connecting the first end piece 117 and the first side frame 150a. The camera switch 152 may be exposed to the outside through the temple 121a of the first side frame 120a.

The first speaker 145a may be electrically connected to the main PCB 142 and embedded in the temple 121a of the first side frame 120a. The first battery 146a may be embedded in the temple tip 122a of the first side frame 120a. The first battery 146a may be electrically connected to the main PCB 142 by an electric wire 146w. The first battery 146a may supply power to the main PCB 142.

The side frames 120a and 120b may include ear portions 123a and 123b connecting the temples 121a and 121b and the temple tips 122a and 122b. The electric wire 146w may connect the first battery 146a and the first power connector 142j of the main PCB 142 inside the temple 121a, inside the ear portion 123a, and inside the temple tip 122a of the first side frame 120a.

A weight of the battery 146a may be relatively heavy by other electronic components. The battery 146a may be embedded in the temple tip 122a, and other electronic components may be embedded in the front frame 110 and the temple 121a. As a result, when the user wears the electronic device 100 on his/her face, the weight of the electronic device 100 is distributed around the user's ear, so that the electronic device 100 may be stably worn by the user.

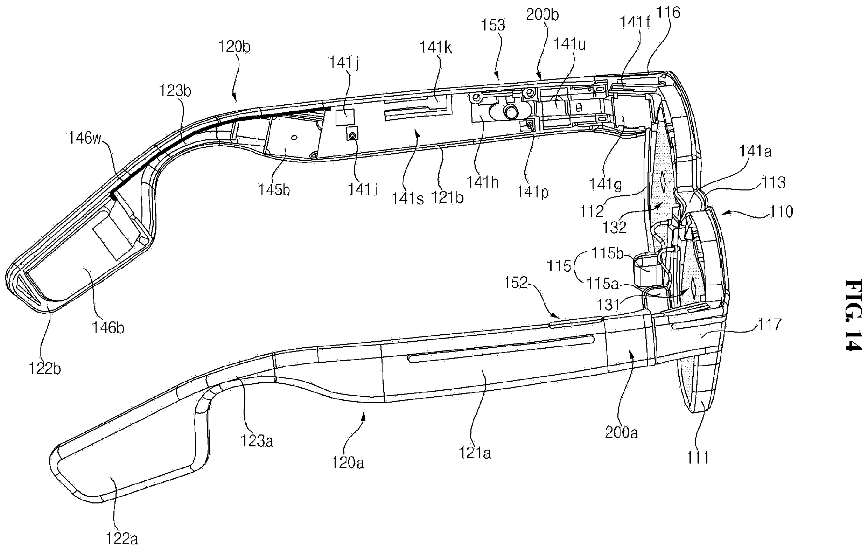

Referring to FIG 14, the second display connector 141f and the second display board 141g may be embedded in the second end piece 116. The flat board 141s may be embedded in the temple tip 121b of the second side frame 120b. The second side frame 121b of the second side frame 120b may be hinge-connected to the second end piece 116 (200b). The second hinge 200b may hinge-connect the second side frame 120b to the second end piece 116.

The second hinge FPCB 141u connecting the second display board 141g and the flat board 141s may be embedded in the second hinge 200b and/or the temple 121b of the second side frame 120b. The power switch 153 may be embedded in the temple 121b of the second side frame 120b, and the switching button 153b (see FIG 12) may be exposed to the outside by the temple 121b in the second side frame 120b.

The second speaker 145b may be embedded in the temple 121b of the second side frame 120b. The second battery 146b may be embedded in the temple tip 122b of the second side frame 120b. The electrical wire 146w may electrically connect the second battery 146b to the sub PCB 141 (see FIG 3). For example, the electric wire 146w may be embedded in the second temple tip 122b, the ear portion 123b, and/or the second temple 121b, and electrically connect the second battery 146b to the second power connector 141j of the sub PCB 141.

The weight of the battery 146b may be relatively heavy by other electronic components. The battery 146b may be embedded in the temple tip 122b, and other electronic components may be embedded in the front frame 110 and the temple 121b. As a result, when the user wears the electronic device 100 on his/her face, the weight of the electronic device 100 is distributed around the user's ear, so that the electronic device 100 may be stably worn by the user.

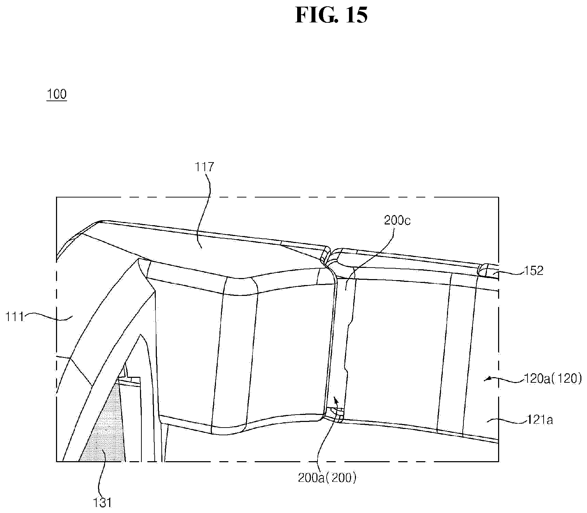

Referring to FIG 15, the side frames 120 and 120a may be hinged to the end pieces 116 and 117. The hinge assemblies 200 and 200a may connect the first end piece 117 and the first temple 121a of the first side frame 120a. The description of describing as an example that the hinge assembly 200a connects the first end piece 117 and the first temple 121a may be equally applied to the hinge structure of connecting the second end piece 116 and the second temple 121b.

The hinge assemblies 200, 200a, and 200b may be referred to as hinge modules 200, 200a, and 200b or hinge units 200, 200a, and 200b. The hinge module 200a may be embedded in the first end piece 117 and the first temple 121a. The cover film 200c may connect the first end piece 117 and the first temple 121a, may be inserted into the first end piece 117 and the first temple 121a, and may cover the hinge module 200a. For example, the cover film 200c may be a thin metal. The cover film 200c may prevent external exposure of the hinge module 200a. In addition, when the first temple 121a is folded with respect to the front frame 110, the cover film 200c may prevent damage to the FPCBs 141 and 141u (in FIGS. 13 and 14).

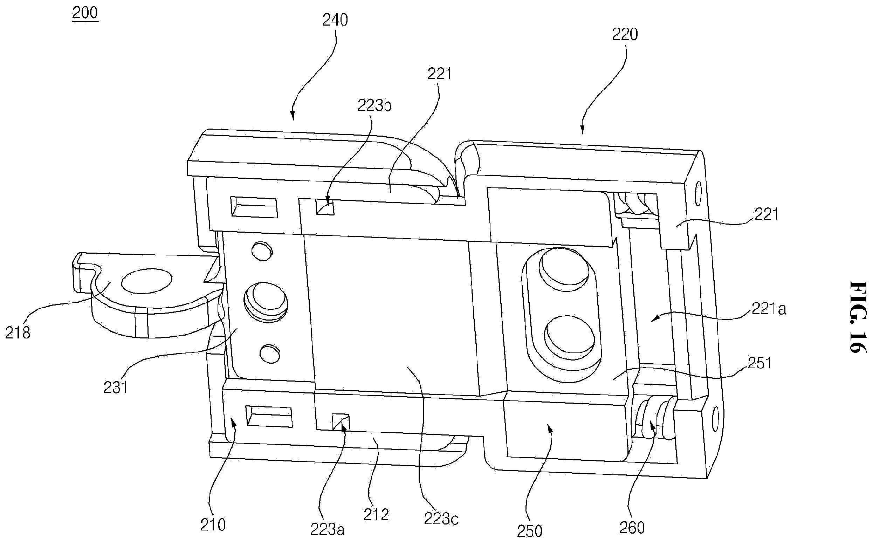

Referring to FIG 16, the hinge module 200 may include a first body 210, a second body 220, a cap 240, and a slider 250. The cap 240 may be coupled to the first body 210. The first body 210 may be inserted into the cap 240. The cap 240 may cover an outer surface of the first body 210. The second body 220 may be coupled to the first body 210. The second body 220 may rotate relative to the first body 210.

The slider 250 may be coupled to the second body 220. The slider 250 may move linearly while sliding with respect to the second body 220. The elastic member 260 may be located between the slider 250 and the second body 220, and may provide an elastic force to the slider 250 from the second body 220.

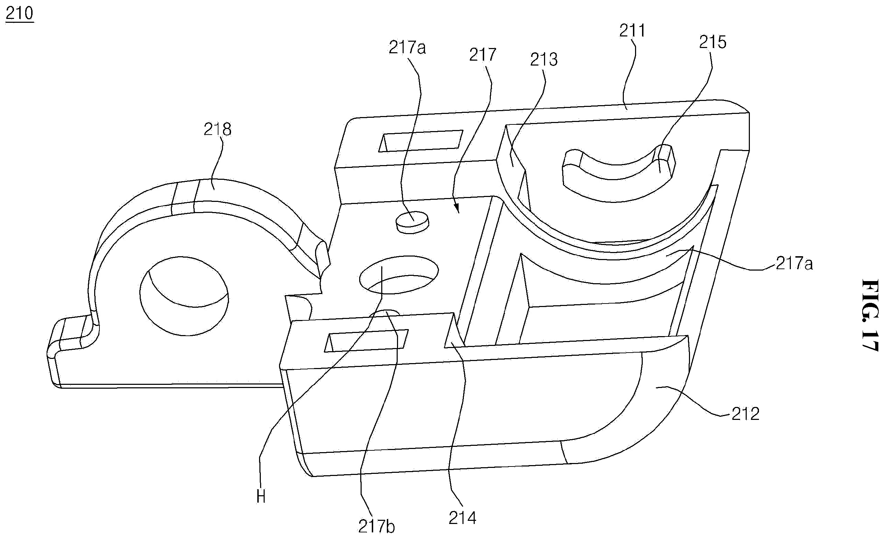

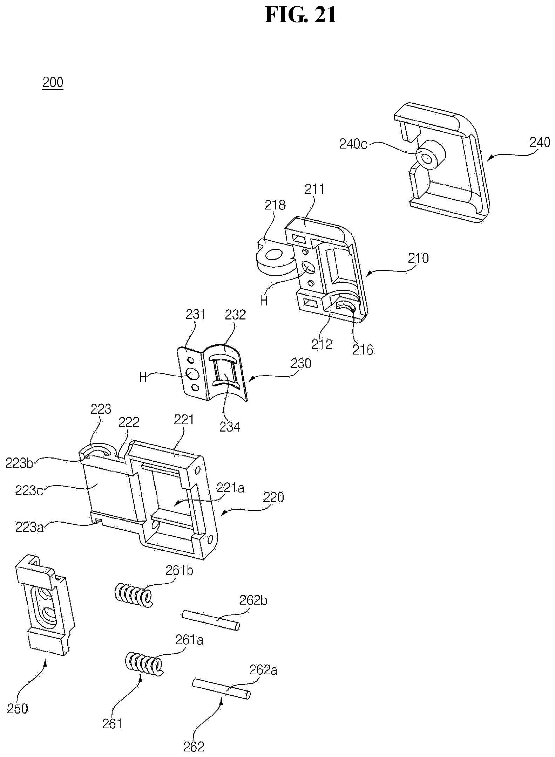

Referring to FIG 17, the first body 210 may include sidewalls 211 and 212, rotary drums 213 and 214, rotary guides 215 and 216 (see FIG 21), a coupling portion 217, and a fixing lever 218. The sidewalls 211 and 212 may form both sides of the first body 210. The coupling portion 217 may be located between a first sidewall 211 and a second sidewall 212. The coupling portion 217 may be recessed while forming a step that is lowered from the sidewalls 211 and 212. The coupling portion 217 may include fixing protrusions 217a and 217b, and a hole H. There may be a plurality of fixing protrusions 217a and 217b, and the plurality of fixing protrusion 217a and 217b may be located on both sides of the hole H. An arc coupling portion 217a may be connected to the coupling portion 217. The arc coupling portion 217a may be located between the rotary drums 213 and 214. The arc coupling portion 217a may form a step that is lowered from the rotary drums 213 and 214.

The rotary drums 213 and 214 may be adjacent to the coupling portion 217 and located between the first sidewall 211 and the second sidewall 212. The rotary drums 213 and 214 may include a first drum 213 and a second drum 214. The first drum 213 may be formed on the first sidewall 211, and the second drum 214 may be formed on the second sidewall 212. The first drum 213 may face the second drum 214. For example, the drums 213 and 214 may have a half-pipe shape.

The rotary guides 215 and 216 may be formed inside the sidewalls 211 and 212 adjacent to the rotary drums 213 and 214. The first rotary guide 215 may be formed inside the first sidewall 211, and the second rotary guide 216 may be formed inside of the second sidewall 212. The first rotary guide 215 may face the second rotary guide 216. For example, the rotary guides 215 and 216 may have a semi-circular ring shape. Curvatures of the rotary guides 215 and 216 may be the same as curvatures of the rotary drums 213 and 214.

The fixing lever 218 may be elongated from the coupling portion 217. The fixing lever 218 may face the rotary drums 213 and 214 with respect to the coupling portion 217. The fixing lever 218 may be coupled or fixed to the end pieces 116 and 117.

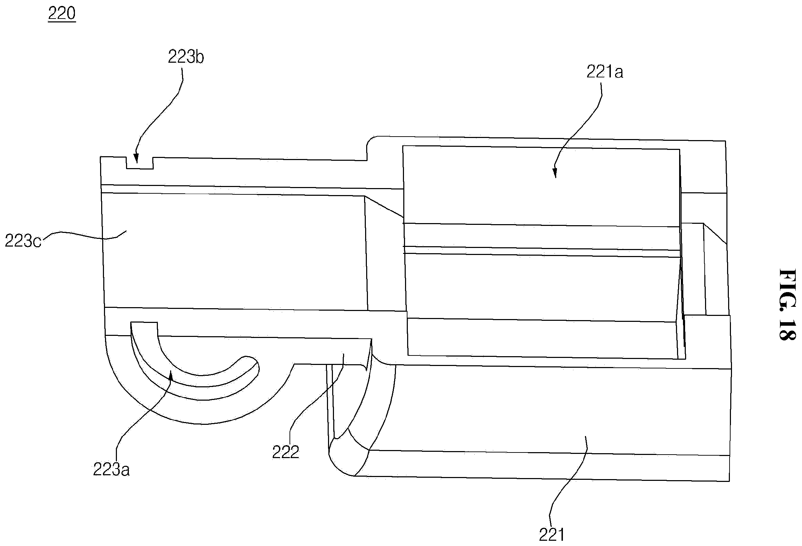

Referring to FIG 18, the second body 220 may include a sliding body 221, a neck 222, and a rotary head 223. The sliding body 221 may have a space 221a therein. For example, the space 221a may have a square box shape. The neck 222 may be extended from an outside of the sliding body 221.

The rotary head 223 may be connected to the neck 222. The rotary head 223 may have a semi-circular columnar shape. The rotary head 223 may include rotary slots 223a and 223b. There may be a plurality of rotary slots 223a and 223b, and the plurality of rotary slots 223a and 223b may be formed on both sides of the rotary head 223. A first rotary slot 223a may face a second rotary slot 223b with respect to the rotary head 223. For example, the rotary slots 223a and 223b may have a semi-circular ring shape. Intaglios of the rotary slots 223a and 223b of the second body 220 may correspond to embossings of the rotary guides 215 and 216 of the first body 210.

The FPCB groove 223c may be formed in the head 223 and the neck 222. The FPCB groove 223c may be formed while being recessed or cut out to the inside of the head 223 and/or the neck 222.

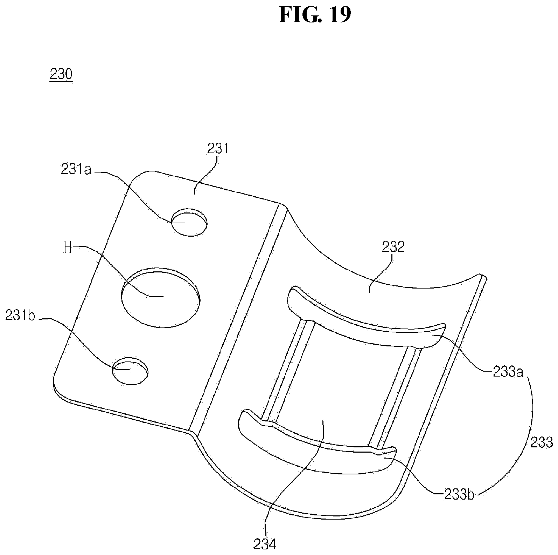

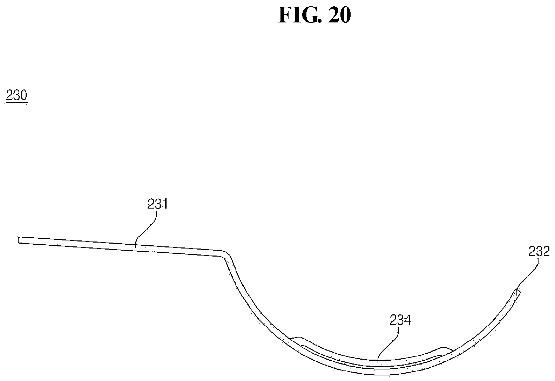

Referring to FIGS. 19 and 20, the hinge module 200 may include an elastic member 230. The elastic member 230 may include a fixing plate 231 and an arc plate 232. For example, the elastic member 230 may be a leaf spring. The fixing plate 231 may include a plurality of holes H, 231a, and 231b. A diameter of a central hole H may be larger than diameters of insertion holes 231a and 231b. The diameter of the central hole H of the elastic member 230 may be the same as diameters of holes 217a and 217b of the coupling portion 217 of the first body 210. The diameters of the insertion holes 231a and 231b of the elastic member 230 correspond to diameters of fixing protrusions 217a and 217b of the coupling portion 217 of the first body 210, and the fixing protrusions 217a and 217a may be press-fitted into or inserted into the insertion hole 231a or 231b.

The arc plate 232 may be extend while being bent from the fixing plate 231. The arc plate 232 may have a semi-circular shape. A curvature of the arc plate 232 may be the same as the curvatures of the rotary drums 213 and 214. The arc plate 232 may include a friction portion 234 and a slit 233. A plurality of slits 233 may be formed on both sides of the friction portion 234. The plurality of slits 233 may be formed by penetrating the arc plate 232. The first slit 233a may face the second slit 233b with respect to the friction portion 234. The friction portion 234 may be formed while being pressed to protrude from the arc plate 232. A curvature of the friction portion 234 may be the same as the curvature of the arc plate 232. A radius of the friction portion 234 may be smaller than a radius of the arc plate 232.

Referring to FIGS. 21 to 23, the elastic member 230 may be inserted into the coupling portion 217 (see FIG 17) and/or the arc coupling portion 217a of the first body 210. The fixing plate 231 of the elastic member 230 may be inserted into the coupling portion 217 of the first body 210, and the arc plate 232 of the elastic member 230 may be inserted into the arc coupling portion 217a of the first body 210. An inner surface of the arc plate 232 of the elastic member 230 may be located at the same level as inner surfaces of the rotary drums 213 and 214.

The cap 240 may be coupled to the first body 210 while covering a rear surface of the first body 210. The central hole H of the elastic member 230 may be aligned with the hole H of the coupling portion 217 of the first body 210. The hole H of the coupling portion 217 of the first body 210 may be aligned with an insertion protrusion 240c of the cap 240. The hole H and the insertion protrusion 240c may be screwed to each other.

The second body 220 may be rotatably or pivotably coupled to the first body 210. A rotary head 223 of the second body 220 may be located in the rotary drums 213 and 214 of the first body 210. An outer surface of the rotary head 223 of the second body 220 may contact inner surfaces of the rotary drums 213 and 214 of the first body 210 and/or an inner surface of a friction portion 234 of the elastic member 230.

Rotary guides 215 and 216 (see FIG 29) of the first body 210 may be inserted into rotary slots 223a and 223b of the rotary head 223 of the second body 220. The rotary guides 215 and 216 may frictionally move in the rotary slots 223a and 223b.

A slider 250 may be located in a space 221a provided by a sliding body 221 of the second body 220. The slider 250 may move linearly in the second body 220. A guide pole 262 may be installed in the space 221a of the sliding body 221. A first guide pole 262a may be installed in the space 221a of the sliding body 221 in line with a second guide pole 262b. The first guide pole 262a may be inserted into a first coil spring 261a, and the second guide pole 262b may be inserted into a second coil spring 261b. The slider 250 may reciprocate in the guide pole 262. The guide pole 262 may be inserted into the slider 250. The coil spring 261 may provide an elastic force to the slider 250. When the slider 250 moves linearly in the sliding body 221, the coil spring 261 may restore a position of the slider 250.

When the second body 220 rotates or pivots with respect to the first body 210, the rotary slots 223a and 223b of the rotary head 223 may move in the rotary guides 215 and 216 of the rotary drums 213 and 214 (see FIG 17). The rotary head 223 may rotate in the rotary drums 213 and 214 and/or the arc plate 232 while contacting the friction portion 234 of the elastic member 230. When the friction portion 234 of the elastic member 230 comes into close contact with an outer surface of the rotary head 223, and the second body 220 stops rotating or pivoting in the first body 210, the second body 220 may maintain a constant rotary angle with respect to the first body 210.

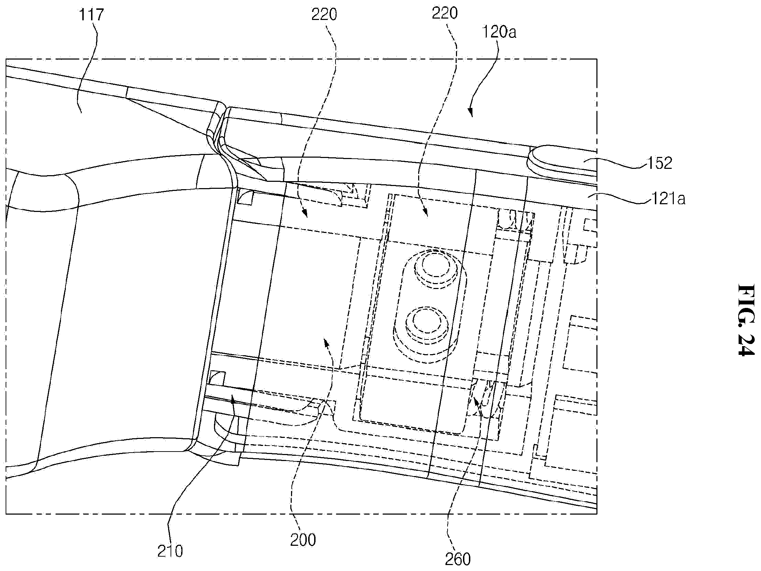

Referring to FIGS. 24 to 26, the hinge module 200 may be embedded in the temple 121a. The slider 250 of the hinge module 200 may be coupled to the temple 121a or fixed to the temple 121a. The hinge module 200 may connect the end piece 117 and the temple 121a. The hinge module 200 may be embedded in the end piece 117 and/or the temple 121a.

The hinge FPCB 141v may be extended from the end piece 117 to the temple 121a while facing the inner surface of the first body 210 and/or the second body 220. The hinge FPCB 141v may be located in a fixing plate 231 of the elastic member 230 and an FPCB groove 223c of the second body 210. The hinge FPCB 141v may be located in an FPCB groove 251 formed inside the slider 250.

When the second body 220 pivots or pivots relative to the first body 210, the hinge FPCB 141v may be curved or bent. A first part 141v1 of the hinge FPCB 141v may be located in the fixing plate 231 of the elastic member 230, and a third part 141v3 may be located in the FPCB groove 251 of the slider 250. A second part 141v2 of the hinge FPCB 141v may be curved or bent while being located in the FPCB groove 223c of the second body 220. The second part 141v2 of the hinge FPCB 141v may be located on a rotary axis of the hinge module 200. This may enable rotation or pivoting of the hinge module 200 with the receiving of the hinge FPCB 141v.

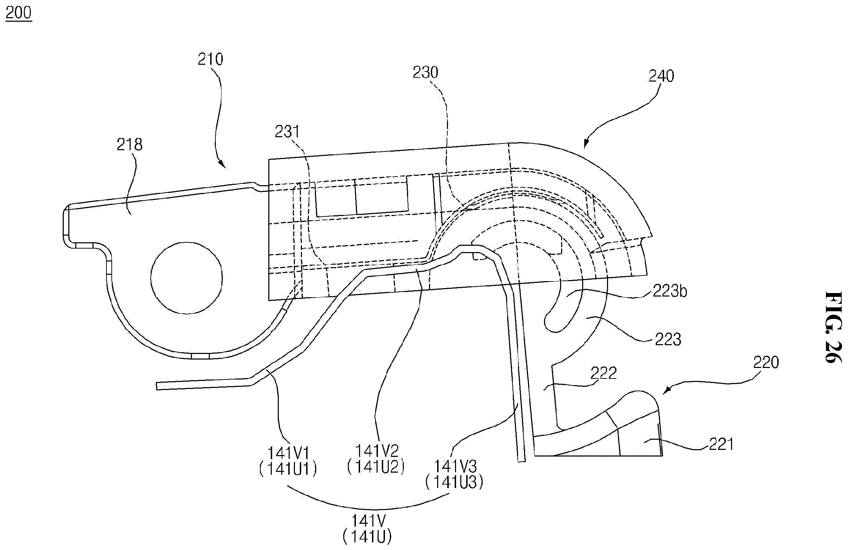

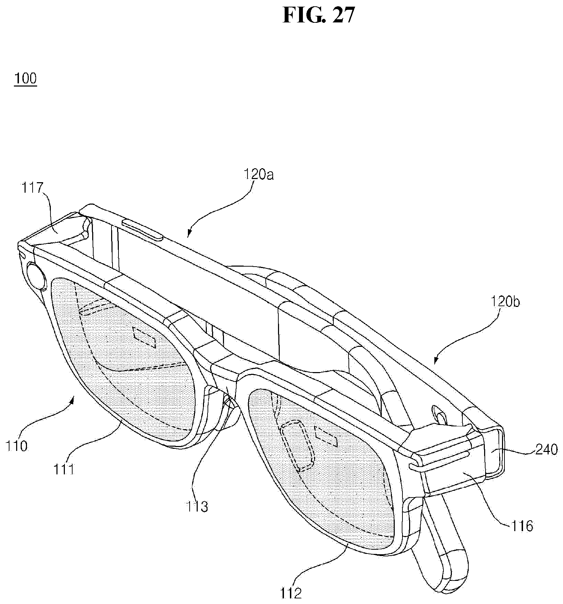

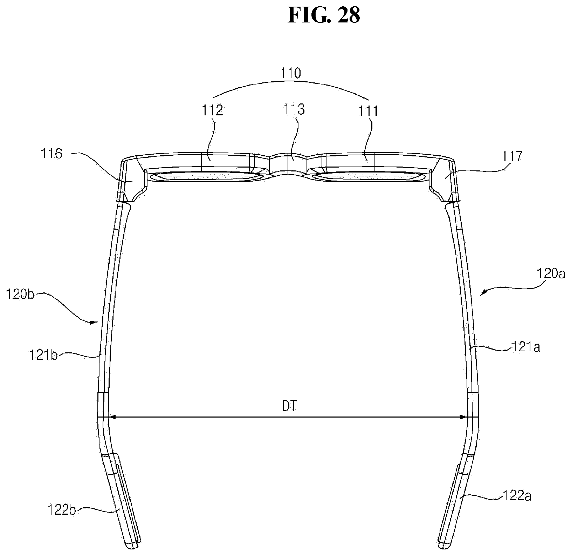

Referring to FIGS. 27 and 28, the temples 121a and 121b of the side frames 120a and 120b may be folded relative to the front frame 110 and/or the end pieces 116 and 117. When the temples 121a and 121b are folded, the cap 240 of the hinge module 200 (see FIG 26) may be exposed between open gaps of the temples 121a and 121b and the end pieces 116 and 117. For example, the cap 240 may be pressed and formed while containing a metal. As a result, an internal structure of the hinge module 200 may be protected, and a durability of the hinge module 20 may be improved.

Referring to FIG 24 together, in a state where the temples 121a and 121b of the side frames 120a and 120b are unfolded, when a force is applied outward to the temples 121a and 121b and/or the temple tips 122a and 122b, a distance DT between the side frames 120a and 120b may be increased. The slider 250 fixed to the temples 121a and 121b may be provided with the elastic force by the elastic member 260 from the second body 220 and may provide a resistance force against the temples 121a and 121b of the side frames 120a and 120b being spread apart from each other. As a result, angles at which the side frames 120a and 120b pivot with respect to the front frame 110 may be increased, and breakage of the hinge module 200 may be prevented.

Referring to FIGS. 1 to 28, the electronic device may include: a front frame to which light-transmissive display units are coupled; side frames hinge-connected to respective sides of the front frame; FPCBs embedded in the front frame and side frames, and extending from the front frame to the side frames; and hinge modules connecting the front frame and the side frames, and each hinge module may include a first body fixed to the front frame on one side, and a second body pivotably coupled to the first body and coupled to the side frame, and the FPCB may face the first body and the second body.

The first body may include a half cylinder-shaped rotary drum, a coupling portion located adjacent to the rotary drum in a radial direction of the rotary drum, and a fixing lever facing the rotary drum with respect to the coupling portion, and fixed to the front frame.

The second body may include a rotary head having the half cylindrical shape, and inserted into the rotary drum, and a sliding body connected to the rotary head, and the FPCB may face the coupling portion of the first body and the rotary head of the second body.

The electronic device may further include: a fixing plate fixed to the coupling portion of the first body, and an elastic member including an arc plate extended from the fixing plate, and located between the rotary drum and the rotary head

The arc plate may include a plurality of slits facing each other, and formed by penetrating the arc plate in a circumferential direction of the arc plate, and a friction portion located between the plurality of slits, and pressed while protruding toward the rotary head from the rotary drum.

The friction portion may frictionally contact an outer peripheral surface of the rotary head of the second body.

The second body may further include a slider located in a hollow space inside the sliding body, a guide pole coupled to the sliding body across the space in a direction from the rotating head toward the sliding body, and a coil spring into which the guide pole is inserted, and in which one side is supported by the sliding body, and the other side is supported by the slider.

The slider may be fixed to the side frame and may linearly reciprocate in a longitudinal direction of the guide pole in a space of the sliding body.

The first body may include a first sidewall crossing a rotary axis of the rotary head on one side of the rotary drum, a second sidewall facing the first sidewall with respect to the rotary drum on the other side of the rotary drum, and a rotary guide formed in at least one of the first sidewall or the second sidewall, and protruding toward the rotary head from the sidewall, and the second body may include a rotary slot formed in the rotary head, into which the rotary guide is inserted.

A curvature of the rotary guide may correspond to a curvature of the rotary drum, and a curvature of the rotary slot may correspond to a curvature of the rotary head.

The electronic device may further include a display panel embedded in the main frame, located on one side of the display unit, and providing an image to the display unit, and the display unit may image-reflect the image provided by the display panel to a light-transmissive region of the display unit.

Certain embodiments or other embodiments of the present disclosure described above are not mutually exclusive or distinct from each other. Any or all elements of the embodiments of the present disclosure described above may be combined or combined with each other in configuration or function.

For example, it is meant that a configuration "A" described in a specific embodiment and/or the drawings and a configuration "B" described in another embodiment and the drawings may be combined with each other. In other words, although the combination between the configurations is not directly described, the combination is possible except in the case where it is described that the combination is impossible.

The aforementioned detailed description should not be construed as restrictive in all terms and should be exemplarily considered. The scope of the present disclosure should be determined by rational construing of the appended claims and all modifications within an equivalent scope of the present disclosure are included in the scope of the present disclosure.

## Claims

1. An electronic device comprising:
a front frame to which light-transmissive display units are coupled;
side frames hinge-connected to respective sides of the front frame;
FPCBs embedded in the front frame and side frames, and extending from the front frame to the side frames; and
hinge modules connecting the front frame and the side frames,
wherein each hinge module includes
a first body fixed to the front frame on one side, and
a second body pivotably coupled to the first body and coupled to the side frame, and
wherein the FPCB faces the first body and the second body.

2. The electronic device of claim 1, wherein the first body includes
a half cylinder-shaped rotary drum,
a coupling portion located adjacent to the rotary drum in a radial direction of the rotary drum, and
a fixing lever facing the rotary drum with respect to the coupling portion, and fixed to the front frame.

3. The electronic device of claim 2, wherein the second body includes
a rotary head having the half cylindrical shape, and inserted into the rotary drum, and
a sliding body connected to the rotary head, and
wherein the FPCB faces the coupling portion of the first body and the rotary head of the second body.

4. The electronic device of claim 3, further comprising:
a fixing plate fixed to the coupling portion of the first body, and
an elastic member including an arc plate extended from the fixing plate, and located between the rotary drum and the rotary head.

5. The electronic device of claim 4, wherein the arc plate includes
a plurality of slits facing each other, and formed by penetrating the arc plate in a circumferential direction of the arc plate, and
a friction portion located between the plurality of slits, and pressed while protruding toward the rotary head from the rotary drum.

6. The electronic device of claim 5, wherein the friction portion frictionally contacts an outer peripheral surface of the rotary head of the second body.

7. The electronic device of claim 3, wherein the second body further includes
a slider located in a hollow space inside the sliding body,
a guide pole coupled to the sliding body across the space in a direction from the rotating head toward the sliding body, and
a coil spring into which the guide pole is inserted, and in which one side is supported by the sliding body, and the other side is supported by the slider.

8. The electronic device of claim 7, wherein the slider is fixed to the side frame and linearly reciprocates in a longitudinal direction of the guide pole in a space of the sliding body.

9. The electronic device of claim 3, wherein the first body includes
a first sidewall crossing a rotary axis of the rotary head on one side of the rotary drum,
a second sidewall facing the first sidewall with respect to the rotary drum on the other side of the rotary drum, and
a rotary guide formed in at least one of the first sidewall or the second sidewall, and protruding toward the rotary head from the sidewall, and
wherein the second body includes a rotary slot formed in the rotary head, into which the rotary guide is inserted.

10. The electronic device of claim 9, wherein a curvature of the rotary guide corresponds to a curvature of the rotary drum, and
a curvature of the rotary slot corresponds to a curvature of the rotary head.

11. **12.** The electronic device of claim 1, further comprising:
a display panel embedded in the main frame, located 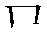 on one side of the display unit, and providing an image to the display unit,
wherein the display unit image-reflects the image provided by the display panel to a light-transmissive region of the display unit.
